# EUROPEAN PATENT SPECIFICATION

(11) **EP 2 659 336 B1**
(45) Date of publication and mention of the grant of the patent: **26.06.2019**
(21) Application number: 10861473.6
(22) Date of filing: 30.12.2010
(51) Int. Cl.: G06F 3/01, G06F 3/0486, G06F 3/0488, G06K 9/00

(54) **USER INTERFACE, APPARATUS AND METHOD FOR GESTURE RECOGNITION**
BENUTZERSCHNITTSTELLE, VORRICHTUNG UND VERFAHREN ZUR GESTENERKENNUNG
INTERFACE UTILISATEUR, APPAREIL ET PROCÉDÉ DE RECONNAISSANCE DE GESTES

(43) Date of publication of application: 06.11.2013
(73) Proprietor: InterDigital CE Patent Holdings, 75017 Paris (FR)
(72) Inventor: ZHOU, Wei, Beijing 100196 (CN); XU, Jun, Beijing (CN); MA, Xiaojun, Beijing 100039 (CN)
(74) Representative: Huchet, Anne
(86) International application number: PCT/CN2010/002206
(87) International publication number: WO 2012/088634

(56) References cited:
- EP-A2- 2 141 576
- EP-A2- 2 244 166
- CN-A- 101 131 609
- US-A1- 2006 209 021
- US-A1- 2009 100 383
- US-A1- 2010 050 133
- US-A1- 2010 235 118
- US-B2- 7 665 041

## Description

### FIELD OF THE INVENTION

The present invention relates in general to gesture recognition, and more particularly, to user interface, apparatus and method for gesture recognition in an electronic system.

### BACKGROUND OF THE INVENTION

As the range of activities accomplished with a computer increases, new and innovative ways to provide an interface between user and machine are often developed to provide more natural user experience. For example, a touch sensitive screen can allow a user to provide inputs to a computer without a mouse and/or a key board, such that desk area is not needed to operate the computer. Gesture recognition is also receiving more and more attentions due to its potential use in sign language recognition, multimodal human computer interaction, virtual reality, and robot control.

Gesture recognition is a rapidly developing area in the computer world, which allows a device to recognize certain hand gestures of user so that certain functions of the device can be performed based on the gesture. Gesture recognition systems based on computer vision are proposed to facilitate a more 'natural', efficient and effective, user-machine interface. In the computer vision, in order to improve the accuracy of gesture recognition, it is necessary to display the related captured video from the camera on the screen. And this type of video can help to indicate to user whether it is possible that his gesture can be recognized correctly and whether he needs to do some adjustment for his position or not. However, the displaying of captured video from the camera usually will have negative impact on watching the current program on the screen for user. Therefore, it is necessary to find one way which can minimize the disturbance to the current program displaying on the screen, and at the same time, keep the high accuracy of recognition.

On the other hand, recently, more and more compound gestures (such as grab and drop) are applied in UI (user interface). These compound gestures usually include multiple sub-gestures and are more difficult to be recognized - than simple gesture. Patent US20100050133 "Compound Gesture Recognition" of H.kieth Nishihara et al. filed on Aug.22, 2008 proposes a method which includes multiple cameras and tries to detect and translate the different sub-gesture into different input for different device. However, the cost and deployment for multiple cameras limit the application of this method in home.

EP 2 141 576 A2 discloses an information processing apparatus, including a direction detection unit that detects a drawing direction of a locus drawn in an input process of a gesture when the gesture is input, a gesture search unit that searches for the gesture matching the drawing direction of the locus detected by the direction detection unit from among a plurality of predetermined gestures, and an auxiliary information display unit that displays a search result by the gesture search unit in a screen as auxiliary information each time the drawing direction of the locus is detected by the direction detection unit.

Therefore, it is important to study the compound gesture recognition in the user interface system.

### SUMMARY OF THE INVENTION

The invention concerns user interface in a gesture recognition system comprising: a display window adapted to indicate a following sub gesture of at least one gesture command, according to at least one sub gesture performed by a user and received by the gesture recognition system previously.

The invention also concerns an apparatus comprising:
a gesture predicting unit adapted to predict one or more possible commands to the apparatus based on one or more sub gestures performed by a user previously; a display adapted to indicate the one or more possible commands.

The invention also concerns a method for gesture recognition comprising: predicting one or more possible commands to the apparatus based on one or more sub gestures performed by a user previously; indicating the one or more possible commands.

### BRIEF DESCRIPTION OF DRAWINGS

These and other aspects, features and advantages of the present invention will become apparent from the following description of an embodiment in connection with the accompanying drawings:

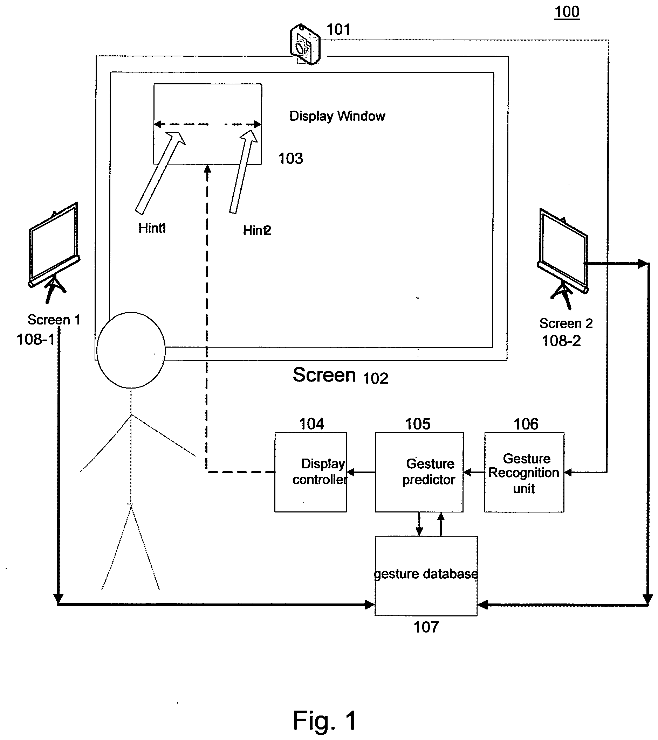

Fig. 1 is a block diagram showing an example of a gesture recognition system in accordance with an embodiment of the invention;
Fig. 1 shows a diagram of hand gestures used to explain the invention;
Fig. 3 is a diagram showing examples of the display window of user interface according to the embodiment of the invention;
Fig. 4 is a diagram showing a region of user interface in the display screen according to the embodiment;
Fig. 5 is a flow chart showing a control method for the opacity of the display window;
Fig. 6 is a flow chart showing a method for gesture recognition according to the embodiment of the invention.

It should be understood that the drawing(s) is for purposes of illustrating the concepts of the disclosure and is not necessarily the only possible configuration for illustrating the disclosure.

### DETAILED DESCRIPTION OF PREFERRED EMBODIMENTS

In the following detailed description, a user interface, apparatus and method for gesture recognition are set forth in order to provide a thorough understanding of the present invention. However, it will be recognized by one skilled in the art that the present invention may be practiced without these specific details or with equivalents thereof. In other instances, well known methods, procedures, components and circuits have not been described in detail as not to unnecessarily obscure aspects of the present invention.

A user can provide simulated inputs to a computer, TV or other electronic device. It is to be understood that the simulated inputs can be provided by a compound gesture, a single gesture, or even any body gesture performed by the user. For example, the user could provide gestures that include pre-defined motion in a gesture recognition environment. The user provides the gesture inputs, for example, by one or both of the user's hands; a wand, stylus, pointing stick; or a variety of other devices with which the user can gesture. The simulated inputs could be, for example, simulated mouse inputs, such as to establish a reference to the displayed visual content and to execute a command on portions of the visual content with which the reference refers.

Fig. 1 is a block diagram showing an example of a gesture recognition system 100 in accordance with an embodiment of the invention. As shown in Fig.1, the gesture recognition system 100 includes a camera 101, a display screen 102, a screen 108-1, a screen 108-2, a display controller 104, a gesture predictor 105, a gesture recognition unit 106 and a gesture database 107. As an example, the camera 101 is mounted above the display screen 102, and the screens 108-1 and 108-1 are located at left and right side of the display screen 102 respectively.

The user in front of the display screen 102 can provide simulated inputs to the gesture recognition system 100 by an input object. In the embodiment, the input object is demonstrated as a user's hand, such that the simulated inputs can be provided through hand gestures. It is to be understood that the use of a hand to provide simulated inputs via hand gestures is only one example implementation of the gesture recognition system 100. In addition, in the example of performing gestures via a user's hand as the input object to provide simulated inputs, the user's hand could incorporate a glove and/or fingertip and knuckle sensors or could be a user's naked hand.

In the embodiment of FIG. 1, the camera 101 could rapidly take still photograph images of the hand gesture of users at, for example, thirty times per second, and the images are provided to the gesture recognition unit 106 to recognize the user gesture. Gesture recognition is receiving more and more attentions recently due to its potential use in sign language recognition, multimodal human computer interaction, virtual reality, and robot control. Most prior art gesture recognition methods match observed image sequences with training samples or model. The input sequence is classified as the class whose samples or model matches it best. Dynamic Time Warping (DTW), Continuous Dynamic Programming (CDP), Hidden Markov Model (HMM) and Conditional Random Field (CRF) are example methods of this category in the prior art. HMM is the most widely used technique for gesture recognition. The detailed recognition method for sub-gesture will not be described here.

The gesture recognition unit 106, Gesture predictor 105, display controller 104 and gesture database 107 could reside, for example, within a computer (not shown) or in embedded processors, so as to process the respective images associated with the input object to generate control instruction indicated in a display window 103 of the display screen 102.

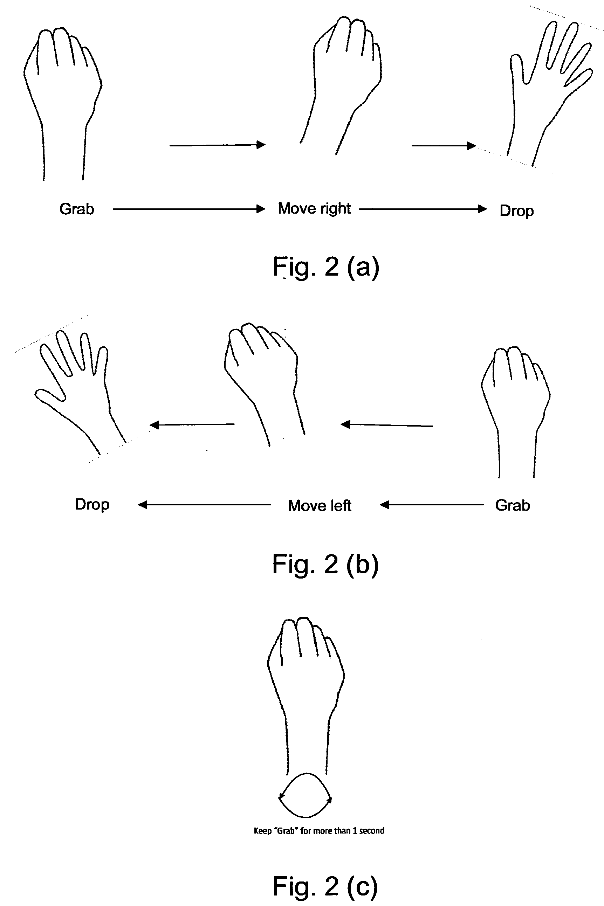

According to the embodiment, single and compound gesture inputs by users can be recognized. A compound gesture can be a gesture with which multiple sub-gestures can be employed to provide multiple related device inputs. For example, a first sub-gesture can be a reference gesture to refer to a portion of the visual content and a second sub-gesture can be an execution gesture that can be performed immediately sequential to the first sub-gesture, such as to execute a command on the portion of the visual content to which the first sub-gesture refers. The single gesture just includes one sub-gesture, and is performed immediately after the sub-gesture is identified. Fig. 2 shows the exemplary hand gesture used to explain the invention.

As shown in Fig.2, a compound gesture includes several sub gestures (or called as subsequent gestures), and depends on which function it represents. We call the first sub gesture as the head gesture and the final as the tail gesture. In 3D UI (three dimensional user interface), there are many functions which share the same first gesture. For example, a typical compound gesture is "grab and drop". In this case, a user can grab scene content from a TV program using his hand gesture and drop it to a nearby picture frame or device screen by making a hand gesture of DROP. Here, the compound gesture definition includes three portions (sub gestures): grab, drop and where to drop. For example, in user's living room, there are a TV set and two tablet devices which are placed on the left and right side of TV respectively as shown in Fig.1. And these two tablet devices have already registered in the system and connected with the gesture database 107. Thus, the compound gestures of "grab and drop" include two types. One has two sub-gestures "grab and drop to left" as shown in Figure 2(b), which means the screen contents indicated by the user will be dropped to the left tablet device, and transmitted to the left tablet device 108-1 from database 107, and another type has "grab and drop to right" as shown in Figure 2(a), which means the screen contents indicated by the user will be dropped to the right tablet device, and transmitted to the right tablet device 108-2 from database 107. These two types share the same first sub gesture "grab". Certainly , if the second of sub gesture is still "grab" which is same as the fist gesture "grab" as shown in Figure 2(c), then the "grab" is kept for more than 1 second, it means that this compound gesture only contain one sub gesture of "Grab" and the screen content will be stored or dropped locally.

Returning to Fig.1, The gesture predictor 105 of the gesture recognition system 100 is adapted to predict one or more possible gesture commands to the apparatus based on the one or more user gestures previously recognized by the gesture recognition unit 106 and their sequence or order. To perform the prediction, another unit compound gesture database 107 is needed, which is configured to store the pre-defined gestures with specific command function.

When the gesture images obtained by the camera 101 is recognized by the gesture recognition unit 106, the recognition result for example a predefined sub gesture will be input to gesture predictor 105. Then by looking up gesture database 107 based on the recognition result, the gesture predictor 105 will predict one or more possible gesture commands and the following sub gesture of the possible gesture commands will be shown as an indication in a display window 103. For example, when the first sub gesture "Grab" is recognized, by looking up the database 107, the predictor can draw a conclusion that there are three possible candidates for this compound gesture "grab and drop to left", "grab and drop to right" and "only grab".

In the database 107, there are still other single and compound gestures as follows: when the head sub gesture is "wave right hand", the tail gestures can be "wave right hand", "wave two hands", "raise right hand" or "stand still" respectively. For example, the head gesture means turning on TV set. If the tail gesture is "wave right hand", it means that TV set plays the program from Set-to-box. If the tail gesture is "wave two hands", it means that TV set plays the program from media server. If the tail gesture is "raise right hand", it means that TV set plays the program from DVD(digital video disc). If the tail gesture is "wave two hands", it means that TV set plays the program from media server. If the tail gesture is "stand still", it means that TV set will not play any program. Although the invention is explained by taking the compound gesture "grab and drop" and two step sub gestures as an example, it cannot be considered a limit to the invention.

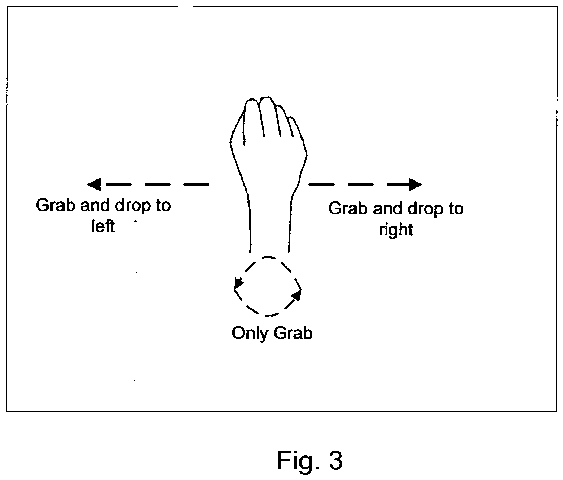

According to the embodiment, the display window 103 presenting a user interface of the gesture recognition system 100 is used to indicate the following sub gesture of the one or more possible commands obtained by the gesture predictor 105, along with information on how to perform a following gesture of a complete possible command. Fig.3 is a diagram showing examples of the display window 103 according to the embodiment of the invention. Here, the size and location of the display window can be selected by one skilled in the art as required, and can cover the image or the whole screen on the display screen 102 or transparent to the image.

The display window 103 on the display screen 102 is controlled by the display controller 104. The display controller 104 will provide some indications or instructions on how to perform the following sub-gesture for each compound gesture predicted by the gesture predictor 105 according to predefined gestures in the list of database 107, and these indications or instructions are shown in the display window 103 by hints together with information on the commands. For example, the display window 103 on the display screen 102 could highlight a region on the screen as display window to help the user go on his/her following sub-gestures. In this region, several hints for example dotted lines with arrow or curved dotted lines are used to show the following sub gesture of possible commands. The information on the commands includes "grab and drop to left" to guide the user to move hand left, "grab and drop to right" to guide the user to right, and "only grab" to guide the user keeping this grab gesture. In addition, an indication of the sub gesture received by the gesture recognition system 100 is also shown at a corresponding location to the hints in the display window 103. Then indication can be the image received by the system or any images representing the sub gesture. Adobe Flash, Microsoft Silverlight and JavaFX can all be used by the display controller to implement such kind of application as the indication in the display window 103. In addition, the hints are not limited to the above, and can be implemented as any other indications as required by one skilled in the art only if the hints can help users to follow one of them to complete the gesture command.

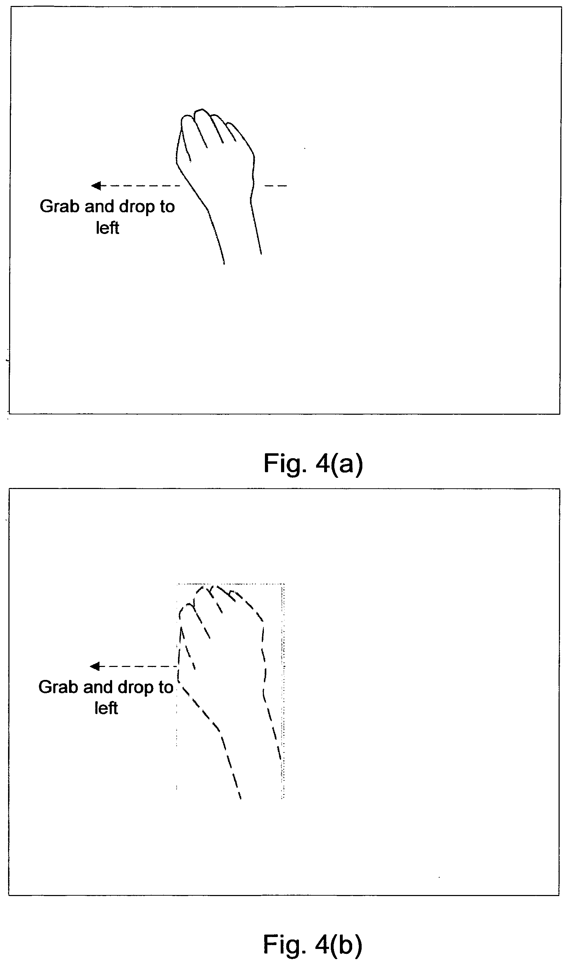

Fig.4 is a diagram showing a region in the display screen 102 according to the embodiment. As shown in Fig.4, the opacity of displaying the above indication and instructions is a key parameter to help the gesture recognition process gradually get clearer. For example, the Alpha value in "RGBA" (Red Green Blue Alpha) technology is a blending value (0 ∼ 1), which is used to describe the opacity value (0 ∼ 1) of the region to reflect the progress of gesture recognition and help to make gesture recognition process gradually get clearer. For example, a first sub gesture of grab has been recognized and the hints are shown in the display window, then the user is conducting the compound gesture "grab and drop to left" by following one of the hints, which is also recognized by the recognition unit, the hints of gestures " grab and drop to right" and " only grab" in the display window will disappear as shown in Fig.4(a). At the same time, the opacity of the display window will decrease with the progress to conduct the gesture "grab and drop to left" as shown in Fig.4(b).

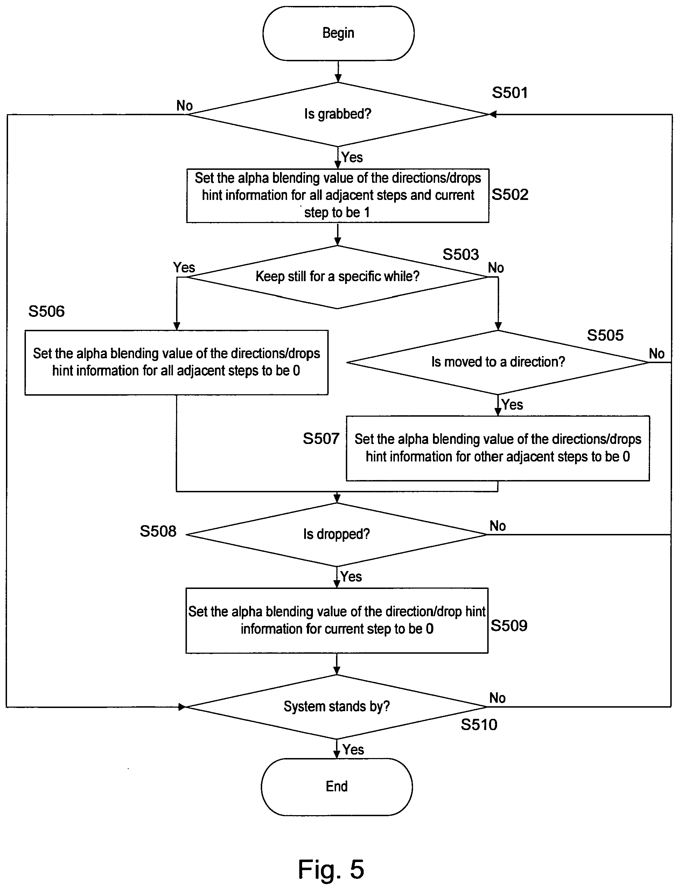

Fig. 5 is a flow chart showing a control method for the opacity of the display window used by the display controller 104 by taking the above compound gesture "grab and drop" as example. At step 501, a decision is implemented to see whether a grab gesture is conducted by the user, which means whether the grab gesture is recognized by the recognition unit. If the answer is no, the method goes to step 510, and the controller stand by. Otherwise, the alpha blending value of the direction lines or drop hints for all adjacent sub gesture steps and current sub gesture step are set to be 1 at step 502. That means all information in the display window is shown clearly. Then at step 503, to judge whether the grab gesture keeps still for a specific while according to the recognition result of the recognition unit, and if the answer is yes, that means the "only grab" is conducted, and then the alpha blending value of the direction lines or drop hints for all adjacent sub gesture steps are set to be 0 at step 506. That means all adjacent sub gesture will disappear in the window. And if the answer in step 503 is no, then the method goes to step 505 to judge the movement direction of the grab gesture. If the gesture moves to one direction according to the recognition result, the alpha blending value of the direction lines or drop hints for other directions are set to be 0 at step 507. Then if the drop gesture is conducted according to the recognition result at step 508, the alpha blending value of the direction lines or drop hints for the current direction are also set to be 0 or decreased to 0 gradually at step 509. On the other hand, if the "only grab" gesture is being conducted, and the drop or store step is being implemented, the alpha blending value of its hint will also set to be 0 or decreased to 0 gradually.

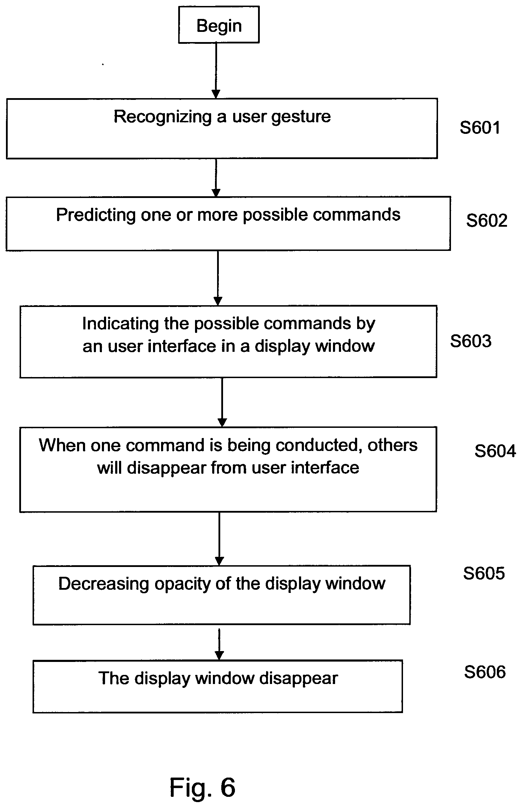

Fig. 6 is a flow chart showing a method for gesture recognition according to the embodiment of the invention. According to the embodiment of the invention, when the first sub-gesture is recognized based on the hand location and other features of hand, the estimation about which gesture commands will be done can be achieved based on the knowledge of all the gesture definition in the database. Then one window will emerge on the display screen to show the gesture and the hints for the estimated gesture commands. Then when the second sub-gesture is recognized, the number of estimation results for the gesture commands based on the first and second sub-gesture recognition result will change. Usually, the number will be less than what is only based on the first sub-gesture. Similar to the statement in the above paragraph, new estimation result will be analyzed and the hints for how to finish the following sub gesture of the commands will be given. Furthermore, if the number of estimation result decreases, the opacity of the window will decrease too. The change for the opacity of the window can be seen as another type of hint for compound gesture recognition.

As shown in fig. 6, the user gesture such as the first sub gesture is recognized by the gesture recognition unit 106 at step 601. Then at step 602 the predictor 105 will predict one or more possible commands to the system based on the one or more sub gestures recognized at step 601, and the following sub gesture of at least one possible command is indicated by an user interface in a display window at step 603. Then when further sub gesture of one command is being conducted, others will disappear from user interface at step 604, and opacity of the display window will be decreased at step 605. Then when the user finished the gesture command, the display window will also disappear at step 606.

Although the embodiment is described based on the first and second sub gestures, further sub gesture recognition and the hints of its following sub gesture of commands shown in the user interface are also applicable in the embodiment of the invention. If there is no further sub gesture is received or the gesture command is finished, the display window will disappear on the screen.

The foregoing merely illustrates the embodiment of the invention and it will thus be appreciated that those skilled in the art will be able to devise numerous alternative arrangements which, although not explicitly described herein, embody the principles of the invention and are within its scope, as defined by the appended claims.

## Claims

1. An apparatus comprising:
a gesture predicting unit (105) adapted to predict one or more possible commands to the apparatus based on one or more sub gestures and an order of the one or more sub gestures previously performed by a user and recognized by the apparatus;
a display (102) adapted to display an indication of a following sub gesture of the one or more possible commands in a user interface in a display window, **characterized in that** the display window has an opacity, and after an initial prediction, the opacity of the display window is decreased when the number of the one or more possible commands decreases compared to the number of previously predicted one or more possible commands.

2. The apparatus according to claim 1, wherein the display (102) is also adapted to indicate the following sub gesture in the user interface by a hint along with information on how to perform the following gesture to complete the commands.

3. The apparatus according to claim 1 or 2, wherein the display (102) is also adapted to indicate the one or more sub gesture recognized by the apparatus.

4. The apparatus according to any one of claims 1-3, wherein when the following sub gesture of one possible command is being conducted by the user and recognized by the apparatus, the display (102) is also adapted to make the following sub gestures of other possible commands disappear in the user interface.

5. The apparatus according to any one of claims 1-4, wherein the gesture predicting unit (105) is adapted to predict the one or more possible commands by using the recognized one or more sub gestures and the order of the one or more sub gestures to search in a database, wherein the database comprises gesture definition of the at least one gesture command, each gesture command comprises at least one sub gesture in a predefined order.

6. A method for gesture recognition in an apparatus comprising:
predicting one or more possible commands to the apparatus based on one or more sub gestures and an order of the one or more sub gestures recognized by the apparatus previously (S602) ;
indicating a following sub gesture of the one or more possible commands by a user interface in an indication (S603) in a display window, **characterized in that** the display window has an opacity, and after an initial prediction, the opacity of the display window is decreased when the number of the one or more possible commands decreases compared to the number of previously predicted one or more possible commands (S605).

7. The method according to claim 6, wherein the following sub gesture is indicated by a hint shown in the user interface, and an indication of the one or more sub gestures recognized by the apparatus is also shown in the user interface.

8. The method according to claim 6 or 7, wherein the one or more possible commands are predicted by using the recognized one or more sub gestures and the order of the one or more sub gestures to search in a database, wherein the database comprises gesture definition of the at least one gesture command, each gesture command comprises at least one sub gesture in a predefined order.

9. The method according to claim 7, wherein the hint is shown along with information on how to perform the following sub gesture to complete the at least one command.

## Patentansprüche

1. Vorrichtung, umfassend:
eine Gesten-Vorhersageeinheit (105), die dafür ausgelegt ist, einen oder mehrere mögliche an die Vorrichtung gerichteten Befehle anhand einer oder mehrerer Untergesten und der Reihenfolge einer oder mehrerer Untergesten vorherzusagen, die zuvor vom Benutzer ausgeführt und von der Vorrichtung erkannt wurden;
eine Anzeige (102), die dafür ausgelegt ist, die nachfolgende Untergeste eines oder mehrerer möglicher Befehle einer Benutzerschnittstelle in einem Anzeigefenster anzuzeigen, **dadurch gekennzeichnet, dass** das Anzeigefenster eine Opazität aufweist und die Opazität des Anzeigefensters nach einer anfänglichen Vorhersage reduziert wird, wenn die Anzahl eines oder mehrerer möglicher Befehle im Vergleich zur Anzahl eines oder mehrerer zuvor vorhergesagter möglicher Befehle abnimmt.

2. Vorrichtung nach Anspruch 1, wobei die Anzeige (102) auch dafür ausgelegt ist, die nachfolgende Untergeste in der Benutzerschnittstelle durch einen Hinweis mit Informationen darüber anzuzeigen, wie die nachfolgende Geste zum Abschluß der Befehle ausgeführt werden soll.

3. Vorrichtung nach Anspruch 1 oder 2, wobei die Anzeige (102) auch dafür ausgelegt ist, eine oder mehrere von der Vorrichtung erkannte Untergesten anzuzeigen.

4. Vorrichtung nach einem der Ansprüche 1 bis 3, wobei die Anzeige (102) auch dafür ausgelegt ist, die folgenden Untergesten anderer möglicher Befehle von der Benutzeroberfläche verschwinden zu lassen, wenn die folgende Untergeste eines möglichen Befehls vom Benutzer ausgeführt und von der Vorrichtung erkannt wird.

5. Vorrichtung nach einem der Ansprüche 1 bis 4, wobei die Gesten-Vorhersageeinheit (105) dafür ausgelegt ist, eine Datenbank unter Verwendung eines oder mehrerer möglicher vorhergesagter Befehle oder eines oder mehrerer erkannter Untergesten und der Reihenfolge einer oder mehrerer vorhergesagter Untergesten zu durchsuchen, wobei die Datenbank eine Gesten-Definition von mindestens einem Gesten-Befehl umfasst und wobei jeder Gesten-Befehl mindestens eine Untergeste in einer vordefinierten Reihenfolge umfasst.

6. Verfahren zur Gesten-Erkennung in einer Vorrichtung, umfassend:
Vorhersagen eines oder mehrerer mögliche an die Vorrichtung gerichteten Befehle anhand einer oder mehrerer Untergesten und der Reihenfolge einer oder mehrerer Untergesten, die zuvor von der Vorrichtung erkannt wurden (S602);
Anzeigen einer nachfolgenden Untergeste eines oder mehrerer möglicher Befehle einer Benutzerschnittstelle in einem Anzeigefenster (S603), **dadurch gekennzeichnet, dass** das Anzeigefenster eine Opazität aufweist und die Opazität des Anzeigefensters nach einer anfänglichen Vorhersage reduziert wird, wenn die Anzahl eines oder mehrerer möglicher Befehle im Vergleich zur Anzahl eines oder mehrerer zuvor vorhergesagter möglicher Befehle (S605) abnimmt.

7. Verfahren nach Anspruch 6, wobei die folgende Untergeste durch einen in der Benutzerschnittstelle dargestellten Hinweis angezeigt wird, wobei eine oder mehrere von der Vorrichtung erkannte Untergesten ebenfalls in der Benutzerschnittstelle angezeigt werden.

8. Verfahren nach Anspruch 6 oder 7, wobei ein oder mehrere mögliche Befehle unter Verwendung einer oder mehrerer erkannter Untergesten und der Reihenfolge einer oder mehrerer Untergesten vorhergesagt werden, wobei die Datenbank eine Gesten-Definition von mindestens einem Gesten-Befehl umfasst und wobei jeder Gesten-Befehl mindestens eine Untergeste in einer vordefinierten Reihenfolge umfasst.

9. Verfahren nach Anspruch 7, wobei der Hinweis zusammen mit Informationen darüber angezeigt wird, wie die folgende Untergeste zum Abschluß von mindestens einem Befehl ausgeführt wird.

## Revendications

1. Appareil comprenant :
une unité de prédiction de gestes (105) adaptée pour prédire une ou plusieurs commandes possibles à l'appareil en fonction d'un ou de plusieurs gestes secondaires et de l'ordre du ou des gestes secondaires précédemment effectués par un utilisateur et reconnus par l'appareil ;
un dispositif d'affichage (102) adapté pour afficher une indication d'un geste secondaire suivant de la ou des commandes possibles dans une interface utilisateur d'une fenêtre d'affichage, **caractérisée en ce que** la fenêtre d'affichage présente une opacité, et après une prédiction initiale, l'opacité de la fenêtre d'affichage est réduite lorsque le nombre de la ou des commandes possibles diminue par rapport au nombre de la ou des commandes possibles précédemment prédites.

2. Appareil selon la revendication 1, dans lequel le dispositif d'affichage (102) est également adapté pour indiquer le geste secondaire suivant dans l'interface utilisateur par une indication avec des informations sur la manière d'effectuer le geste suivant pour exécuter les commandes.

3. Appareil selon la revendication 1 ou 2, dans lequel le dispositif d'affichage (102) est également adapté pour indiquer le ou les gestes secondaires reconnus par l'appareil.

4. Appareil selon l'une quelconque des revendications 1 à 3, dans lequel lorsque le geste secondaire suivant d'une commande possible est effectué par l'utilisateur et reconnu par l'appareil, le dispositif d'affichage (102) est également adapté pour faire disparaître les gestes secondaires suivants d'autres commandes possibles dans l'interface utilisateur.

5. Appareil selon l'une quelconque des revendications 1 à 4, dans lequel l'unité de prédiction de gestes (105) est adaptée pour prédire la ou les commandes possibles à l'aide du ou des gestes secondaires reconnus et de l'ordre du ou des gestes secondaires à rechercher dans une base de données, dans lequel la base de données comprend la définition de geste de l'au moins une commande par geste, chaque commande par geste comprenant au moins un geste secondaire dans un ordre prédéfini.

6. Procédé de reconnaissance de gestes dans un appareil comprenant :
la prédiction d'une ou de plusieurs commandes possibles à l'appareil en fonction d'un ou de plusieurs gestes secondaires et de l'ordre du ou des gestes secondaires reconnus précédemment par l'appareil (S602) ;
l'indication d'un geste secondaire suivant de la ou des commandes possibles par une interface utilisateur dans une indication (S603) d'une fenêtre d'affichage, **caractérisée en ce que** la fenêtre d'affichage présente une opacité, et après une prédiction initiale, l'opacité de la fenêtre d'affichage est réduite lorsque le nombre de la ou des commandes possibles diminue par rapport au nombre de la ou des commandes possibles précédemment prédites (S605).

7. Procédé selon la revendication 6, dans lequel le geste secondaire suivant est indiqué par une indication affichée dans l'interface utilisateur, et une indication du ou des gestes secondaires reconnus par l'appareil est également affichée dans l'interface utilisateur.

8. Procédé selon la revendication 6 ou 7, dans lequel la ou les commandes possibles sont prédites à l'aide du ou des gestes secondaires reconnus et de l'ordre du ou des gestes secondaires à rechercher dans une base de données, où la base de données comprend la définition de geste de l'au moins une commande par geste, chaque commande par geste comprenant au moins un geste secondaire dans un ordre prédéfini.

9. Procédé selon la revendication 7, dans lequel l'indication est affichée avec des informations sur la manière d'effectuer le geste secondaire suivant pour exécuter l'au moins une commande.
